# EUROPEAN PATENT APPLICATION

(11) **EP 1 315 064 A1**
(43) Date of publication of application: **28.05.2003**
(21) Application number: 01127722.5
(22) Date of filing: 21.11.2001
(51) Int. Cl.: G06F 1/00

(54) **Single authentication for a plurality of services**

(71) Applicant: SUN MICROSYSTEMS, INC., Mountain View, California 94043-1100 (US)
(72) Inventor: Laux, Thorsten O., Mountain View, CA 94040 (US); Voitenko, Mikhail, 22307 Hamburg (DE); Eilers, Bernd, 21107 Hamburg (DE)
(74) Representative: HOFFMANN - EITLE

(57) **Abstract**

Processing system and method for improving the efficiency of user authentication in a computing environment. It is proposed to receive authentication information upon initialisation of a first service by an end user and to generate a security for initialisation of further subsequent services through the same end user without repeated submitted of authentication information.

## Description

### FIELD OF THE INVENTION

The present invention relates to a processing system and a method for handling a plurality of services with only a single authentication.

### BACKGROUND OF INVENTION

Data processing devices are used for the widest range of increasingly versatile applications, providing services ranging from, e.g., editing of text documents or spread sheet applications to complex software systems, e.g., computer-aided design systems or systems adapted to manufacturing, purchasing, computer-aided banking, etc. Further, increasingly complex software applications are employed in the field of personal services, e.g., for personal data organization, mobile communication applications like mobile telephones or hand-held computing devices, or other services provided or computer networks like the Internet.

The more elements are involved in a computer-supported service environment, where communication takes place over a computer networks, the more important it is to ensure appropriate authentication of each user of such a system to avoid abuse of user-specific, personal data or any other data being related to the correct operation of the computing environment.

However, while the number of computer-supported applications is significantly increasing over time, concepts and methods for appropriate authentication of a user of such a system still rely on an individual authentication of the user for each single service. In other words, when accessing multiple services in the computing environment, the user usually has to separately authenticate himself for each one of these services to obtain the related functionality.

Typically, for each single service an associated log-in mechanism will require authentication of the user, e.g., through submission of a user name and a user password, as for security reasons it is often not acceptable to keep passwords in related memories and pass it between different service applications.

While an authentication functionality may be easily implemented in a "closed" environment, such as an operating system on a personal computer or a main frame, where applications and interactions can easily exchange data, in a distributed application like an application carried out using a plurality of data processing devices in a computer network, the realization of an authentication functionality may become complex and cumbersome.

If a user interacts with different services on different data processing devices, currently an individual authentication is required upon initialisation of each single service on the respective data processing devices. This applies even if the user previously submitted this information to a plurality data processing devices.

Moreover, as authentication mechanism of the individual services running on the data processing devices may differ, authentication procedures are further complicated and it becomes impossible to provide an appropriate look and feel of applications for a user.

Still further, another severe disadvantage of existing solutions is a repeated request for authentication during a session or interaction between the user and the computing environment, which each time interrupts a provision of services to the user, thereby reducing efficiency of user interaction.

### SUMMARY OF INVENTION

In view of the above, it is desirable to improve the efficiency of user authentication in a computing environment.

According to an example, managing a plurality of services at a session management unit, includes: - receiving authentication information from a session processing unit adapted to handle a service session divided into a plurality of services, upon initialisation of a first service, and - returning a security token for initialisation of each subsequent service of the service session without repeated submission of authentication information. Thus, e.g. a user does not need to repeatedly submit authorisation information for different services.

Advantageously returning the security token to the session processing unit may be effected only after successful verification of the authentication information. Thus, it can be avoided that, e.g., a fraudulent user obtains a security token without submitting valid authentication information.

Further, a service host may be identified for each service request submitted by the session processing unit and the service request may be forwarded to the identified service host. Thus, e.g. a plurality of service hosts may be involved in providing services while avoiding repeated authentication of a user.

Service data may be received at the session management unit in response to the processing of the service request at the service host for subsequent forwarding to the session processing unit. Thus, an information exchange between the service host and the session processing unit may be channelled through the session management unit.

Alternatively, or in addition thereto, a direct forwarding of service data from the service host to the session processing unit may be effected in response to the processing of the service, e.g., to avoid resource intensive routing of data through the session management unit.

A session context information may be maintained, comprising at least the security token assigned for the service session, the authentication information, a list of services activated during the service session, and a list of connection points to related service hosts.

Further, the session context information may be maintained in a centralized manner at the session management unit. Alternatively or in addition thereto, the session context information may be maintained in a distributed manner at the service hosts.

Further, at least one service connection may be returned to a service host in addition to the security token for direct contact of the session processing unit to the at least one service host.

The session processing unit may be located at a client side and the session management unit may be located at a server side to remotely communicate with the session processing unit. Accordingly, the invention may be realized in a distributed system.

According to another example, handling, at a session processing unit, a service session divided into a plurality of services may include: - transmitting authentication information to a session management unit upon initialisation of a first service; and - receiving a security token for initialisation of each subsequent service of the service session without repeated submission of authentication information.

Further, it may be evaluated whether a new service request requires a new application module, further installing the new application module at the session processing unit in the affirmative case, and assigning the session token and optionally service connection points to the newly installed application module.

An authentication window may be set up for input of authentication data at a display, and the authentication window may be set up as a browser window. At least one of the services of a service session may be a Web service and the Web service may be a browser for browsing through data in a network of data processing devices.

According to another example, a program may have instructions for carrying out the above operations. Further, a computer readable medium may be provided, in which a program is embodied, where the program is to make a computer execute the above operations. A computer program product may comprise this computer readable medium.

Further embodiments of the invention are disclosed in the claims.

### DESCRIPTION OF DRAWING

- Fig. 1: shows a schematic diagram of a processing system adapted to handle a plurality of services according to the present invention;
- Fig. 2: shows a flowchart of a method for handling a plurality of services according to the present invention;
- Fig. 3: illustrates session processing context from the viewpoint of an endues in the sense of the present invention;
- Fig. 4: illustrates a session management context from the viewpoint of a session management domain in the sense of the present invention;
- Fig. 5: shows a flowchart of a further method for handling a plurality of services according to the present invention;
- Fig. 6: shows a flowchart of a method for terminating a plurality of services according to the present invention;
- Fig. 7: illustrate different scenarios for interaction between the session processing/handling domain and the session context/service domain according to the present invention; in particular for a client server distributed computing environments;
- Fig. 8: illustrates the combined provision of security token and of service connection point(s) according to the present invention;
- Fig. 9: illustrates the combined provision of a security token and related service connection point(s) together with a service support verification according to the present invention;
- Fig. 10: shows a flowchart for extending the available functionality at the end user side for the provision of additional services without repeated authentication according to the present invention;
- Fig. 11: illustrates different ways to achieve service support evaluation according to the present invention;
- Fig. 12: shows a client-service system using the single authentication process for a plurality of services according to the present invention;
- Fig. 13: illustrates the interaction between a session handling domain and a service managing domain for a distributed client-service system; and
- Figs. 14(a) and 14(b): give a more detailed insight into the interaction between the session handling domain and the session management/processing domain according to Fig. 13.

### DETAILED DESCRIPTION OF PREFERRED EMBODIMENT

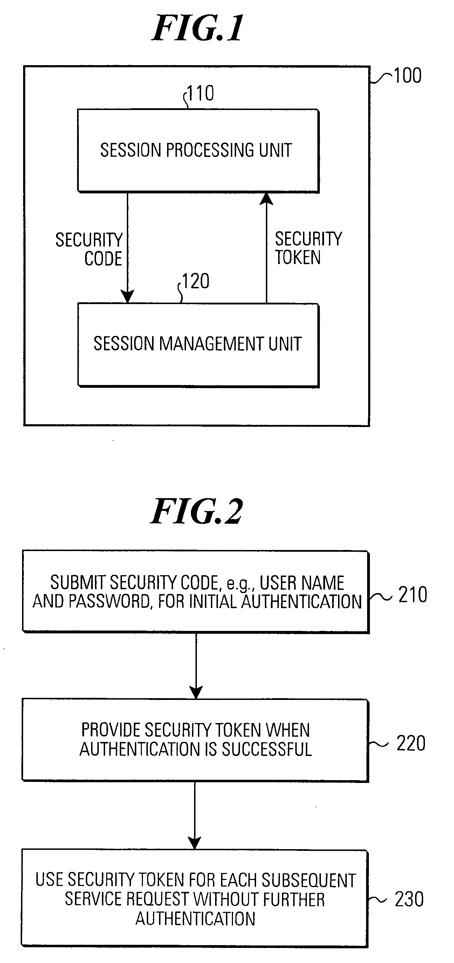

In the following an embodiment of the present invention will be described with respect to Fig. 1.

As shown in Fig. 1, the embodiment realises a processing system 100 dividing into a session processing unit 110 and a session management unit 120. The session processing unit is adapted to provide and use specific functionalities with respect to different services to an end user. On the other hand, the session management unit 120 is adapted to provide those functionalities with respect to service(s) not being handled at the end user side, such as administration of user data, authentication information verification, identification of the requested service(s) etc.

As shown in Fig. 1, the session processing unit is arranged to submit a security code, e.g., a password and a user name, to the session management unit for subsequent verification. In response to the submitted security code the session management unit 120 will then provide a security token to the session processing unit 110. Further, the session processing unit 110 is adapted to use this security token for subsequent interaction with the session management unit 120 such as request of a further service(s) without a repeated or authentication or in other words repeated submission of user name and passwords.

The present embodiment aims at improving the efficiency of user authentication in a computing environment. Repeated user authorization operations are cumbersome and may deter a user from requesting services.

To avoid repeated user authorization operations it should be understood that each single service typically divides into different service aspects of processing, e.g., I/O functionality, data display functionality, computing, etc., and further service management, e.g., administration of user data, password data, etc. Also, service management relates to the question where a specific request for a service will actually be processed, e.g., on which data processing system in a distributed computing environment.

From the above, it should be clear that end users may have access to either a single device or a plurality of devices being adapted to service processing, e.g., user authentication, data display, etc.

On the other hand computing device(s) handling service management are not under control of end users. Therefore, an end user has to authenticate towards the service management domain - i.e., the computing device(s) handling service management and service provision to end users. However, within this service management domain not for every single data exchange/service activation a related authentication is necessary.

The consequence from this is that once an end user has achieved a first successful authentication towards the service management domain, there exists at least one data processing system in this domain - e.g., access or entry server - that has verified the correctness of the authentication information. From this, it becomes clear that a repeated authentication towards a further unit in the service management domain becomes obsolete when information about a first valid authentication within the service management domain is transparent to all other units in this domain after such a successful authentication.

A further operation towards the achievement eliminating repeated user authentication operations is then the establishment of a mechanism that allows the end user to indicate to each data processing device in the service management domain that it has already achieved a successful authentication during a subsequent access to this domain.

Heretofore, it is proposed to receive authentication information, e.g., a user password and a user name, upon initialisation of a first service of a user, and then to generate a security item equivalently referred to as security token or security code in the following.

Upon initialisation of a further service the end user may then use this security token for access to the service management domain simply by adding the security token to the service request before submission of the service request.

Further upon receipt of the service request expanded by the security token each data processing device in the service management domain - e.g., without restricting of the scope of the present invention a single computing device or a plurality of computing devices where a first computing device is a service management device and other devices are service host devices actually providing the services - may then use the security token for authentication before actually providing the related service(s).

Here, contrary to existing authentication mechanisms, the security token may also be maintained at a data computing device(s) under control of the end user - e.g., through storage in any appropriate storage media - so that upon each subsequent service request it may be automatically attached to such a service request for submission to the service management domain. In other words, the initialisation of an authentication process for each single service request becomes obsolete.

Further, it is found that it may be of benefit to summarize a plurality of different services and related requests into a service session.

One typical example of such a service session may be a plurality of services being related to a Web browser and at least one plug-in where both the Web browser and the related plug-in modules request different services like browsing the Internet, audio and video services, etc.

In particular, the consideration of a plurality of services as a session enables a facilitated handling of such a plurality of services in the service management domain. One example would be that one can easily check upon receipt of a service request whether a related service has already been started so as to avoid redundant initialisation of such a service.

Further, in relation to each session context there is maintained the related user name, security token, a list of all activated services and related connection points to service hosts providing related services. This approach facilitates a consistent redundancy-free maintenance of data being related to a plurality of services and a single end user.

In view of this, the concepts outlined above - i.e., the provision of a security token to an end user which may use this token for initialisation of a plurality of services at a service management domain during a service session - it is clear that finally the end user may wish to terminate such a service session.

Here, according to the invention the security token will be released by the service management domain. In other words, according to the invention it is proposed to use the security token only over a limited period of time or, in other words, in a temporary manner.

This contributes significantly to increase of security within a service processing environment as it becomes practically impossible to decipher each single security token during the period of time where the security token is valid, since - contrary to user names and user passwords which are maintained over a longer period of time - the time period where each security token is valid will be comparatively short.

Further examples of the present invention relate to specifics of the session management domain. As will be seen in the following, the session management domain handles both the administration of service context information and the triggering of services at at least one data processing device within the service management domain, also referred to a service host in the following.

Here, the session management domain may be embedded into a distributed computing environment where administration of session context information is assigned to a first data processing device - which may be referred to as entry or access server - and the provision of services is assigned to at least one further data processing device - which may be referred to as service host or server.

In this case, a significant advantage is that an end user has only a single entry point into the session management domain and that each and every data exchange thereto is handled only via such a single entry point.

The above may be achieved through application of the client/server architecture within the framework of the present invention, where the session processing unit is assigned to the client and the session management unit is assigned to a server. In addition, the service host(s) may be provided as additional server(s) in the session management domain and be linked to the session management server - which may be without restriction of the present invention a Web server - via data communication networks like the Internet.

According to an example, a first option is that - after successful authentication and provision of a security token to the client - a service request with the security token is then submitted to the Web server which then identifies the appropriate service host for activation of the related service. The service host may then run the service to generate related service data for feedback to the client, either via the Web server or in a direct manner. The former has the advantage that the client only exchanges data with the Web server, while in the latter case the speed of data transfer is accelerated due to direct interaction of the client and the service host.

According to a second option, after a successful authentication the client handling the services at the end user side not only receives the security token but also at least one service connection point - i.e., an access point like an IP address or port number in the service management domain - for direct access to the service host after receipt of security token. This further enhances the speed of data communication and increases the efficiency of data exchange between the service handling domain and the service management domain.

As outlined above, the support of a plurality of services within the framework of a service session is of importance to achieve end user convenience. Here, one can easily imagine a situation where the request of a service requires a modification of the data processing system running the plurality of services at the end user side, typically the installation of new software. One such typical example would be the use of a Web browser by an end user where the request for some specific service like audio or video requires the installation of a related audio or video plug-in into the browser. In a more general form, such a situation occurs when a main program necessitates the installation of an auxiliary program to enhance its capability.

Such a situation may be handled by evaluating in a first operation, whether a new service requires the modification of software installations at the data processing device supporting the end user, then to install the new software at the related data processing device and finally to assign the previously submitted session token - and optically service connection points - also to the newly installed software.

A benefit of such a methodology is that besides a request for a new service the end user is freed from additional input of data as the new functionality and related software is automatically extended by the previously assigned security token which may then be used for receiving services being related to the newly installed software from the service management domain.

The above solution also has the benefit that the very initial log-in dialogue may be realized via a Web display page being issued by a Web server. Therefore, the log-in dialogue fits perfectly into the look and feel of Web application(s) running in a distributed computing environment. Yet another advantage is that this approach allows to reduce browser plug inside when at least part of the client components are plug-in modules as not each single plug-in module must realize a log-in dialogue functionality.

According to another aspect there is provided a computer program and related computer program product directly loadable into the internal memory of a computer comprising software code portions for performing the inventive process.

This allows an implementation of the above operations on computer or processor systems. Such implementation leads to the provision of computer program products for use with a computer system or more specifically a processor comprised in, e.g., a client/server system.

These programs defining the above operations can be delivered to a computer/processor in many forms, including, but not limited to information permanently stored on non-writable storage media, e.g., read only memory devices such as ROM or CD ROM discs readable by processors or computer I/O attachments; information stored on writable storage media, i.e. floppy discs and harddrives; or information convey to a computer/processor through communication media such as network and/or and/or the internet and/or telephone networks via modems or other interface devices. It should be understood that such media, when carrying processor readable instructions implementing the inventive concept represent alternate embodiments of the present invention.

Within the embodiment shown in Fig. 1 the processing system 100 may be constituted by any kind of data processing device or combination of data processing devices, such as a general purpose data processing devices, a plurality of interconnected data processing devices, including client and server units, a mobile computing device, a personnel data organiser, a mobile communication device including a mobile telephone and similar. Similarly, the session management unit and/or session processing unit may be constituted by any kind of data processing unit or group of data processing units.

Further, the data exchange between the session processing unit 110 and the session management unit 120 may be achieved through any kind of internal or external communication link, e.g., communication networks such as local area networks, wide area networks, virtual networks or the Internet. Further, provision of data between the session processing unit 110 and the session management unit 120 may be obtained trough wireless communication links or fixed wired communication links, or any other communication means. In any case, standard protocols for access and/or retrieval of data over a communication link may be employed, e.g., a communication standard such as HTTP (Hypertext transfer protocol) or similar.

The security token may be any kind of information allowing an identification for the purpose of, e.g., obtaining a service or establishing a session. The security token may be constituted by any sequence of characters allowing an unambiguous identification for authentication purposes. Besides the provision of a character string as security token one might as well use a number as security token, or yet another alternative would be the use of a cookie, which is set when an end user connects to a server. Here, a cookie is unique for the connection of an end user to a server and it will be managed at the end user client side to specify a browser session. Yet another alternative would be the use of a plurality of security tokens for a single session or a combination of cookies and at least one security token for the handling of a single service session. In the latter case, the cookie will be used for access to the entry server in the service management domain, as the communication with this server is achieved via the browser and the further security token may be used for access to the service host. Further to the above, it should be clear that according to the present invention a security token may also be provided via a chip card or equivalently smart card handed out to an end user. The end user may then plug in the smart card or chip card carrying the security token to any appropriate device supporting the services requested by the end user. While above, different examples for the provision of security tokens have been given, it should be clear that these are only examples for the present invention and not to be construed as limiting the present invention.

Further, while above the submission of, e.g., a user password and a user name for authentication has been given as one example for an authentication mechanism, it should also be clear that any other appropriate approach to authentication does well lie within the scope of the present invention. One such example would be the evaluation of biometric data like finger prints, the scanning of an eye, and also physical means of authentication like use of keys, identification cards, etc. Again, all these examples well lie within the scope of the invention and do not either restrict or limit scope thereof.

Even though, Fig. 1 shows the processing system 100 as single element, it is also possible that the functionalities of the session processing unit 110 and the session management unit 120 are provided at different locations, as may be the case in a distributed computer network like the Internet or a local area network.

Further, insofar as data has to be stored in connection with operations of the processing system, this may be done at an external location such as a memory unit accessible through an external communication link, while other parts of data may be stored in components of the processing system 100, e.g., on a hard disk, a RAM or similar. In particular, modifications of data such as security token may be stored in an internal memory of a component of the processing system 100.

Further, the different components discussed so far could be realised by a central processing system of a data processing system or by corresponding software operations or could be realised as a hardware device, located inside the processing system. Another example would be a combination of a software and hardware realisation. Moreover, it is possible, that the session processing unit 110 is partially or entirely arranged at a location external to the processing system.

Further, it is noted that a computer- readable medium may be provided having a program embodied thereon, where the program is to make a computer or a system of data processing devices execute functions or operations of the features and elements for the above described example. A computer readable medium may be magnetic or optical or tangible medium on which a program is recorded, that can also be a signal, i.e. analogue or digital, electric, magnetic or optical, in which the program is embodied for transmission. Further, a computer program product may be provided comprising the computerreadable medium.

In the following, a further embodiment of the invention will be described with respect to Fig. 2.

Fig. 2 shows a flow chart of the method according to the embodiment shown in Fig. 1.

As shown in Fig. 2, initially an end user submits a security code in a first operation 210, e.g., a user name and a password, for initially authentication. The initial authentication may include any authentication operation, including authentication operations known in the art.

Then, in a subsequent operation 220, there is provided a security token when the authentication is successful. The security token may be generated by a session management unit, or may be obtained from another entity, including an entity external to the processing system, e.g., after successful authentication in operation 210. Further, the security token preferably includes information which cannot be inferred by a fraudulent user, and thus can be used as a proof of authorization. It is also possible that the security token is altered for each subsequent authentication before a desired service, e.g. according to an algorithm. This allows to further reduce the risk of fraud. A fraudulent user, even if eavesdropping a security token used at one point for authentication, as the security token is continuously changed, could not use this version of the security token for authentication.

Then, in a operation 230 the end user may use the security token for each subsequent service request without further authentication. This may involve an active submission by the user, however, for improved user friendliness, the security token could be automatically submitted for authentication.

In case in operation 220 the authentication is not successful, the request for a service can be rejected. Another example would be that the end user is again requested for input of authentication information, e.g. to correct the user name and/or user password. According to another example, the authentication of the submitted user name and password may be repeated at a later time.

A session management unit or any other entity of the system may maintain session context information comprising at least the security token assigned for the service session, the authentication information, a list of services activated during the service session, and a list of connection points to related service hosts.

Further, the session context information may be maintained in a centralized manner at the session management unit. Alternatively, or in addition thereto, the session context information may be maintained in a distributed manner at one or a plurality of service hosts.

From the above, it becomes clear that the provision of each service may be divided in end user specific data processing and further data processing which is not under control of the end user. The examples for the former would be I/O functionality, data display functionality, local computing, etc. In the latter case, the functionality relates to the administration of user data, password data, and also the provision of service data like display data or data in response to a data base interrogation to the end user.

Therefore, the provision of a service or of services for an end user may be considered as falling into an end user specific service handling domain and into a service management domain not controlled by the end user, irrespective of which are the examples given above for the processing of related tasks and exchange of data underlies the service provision.

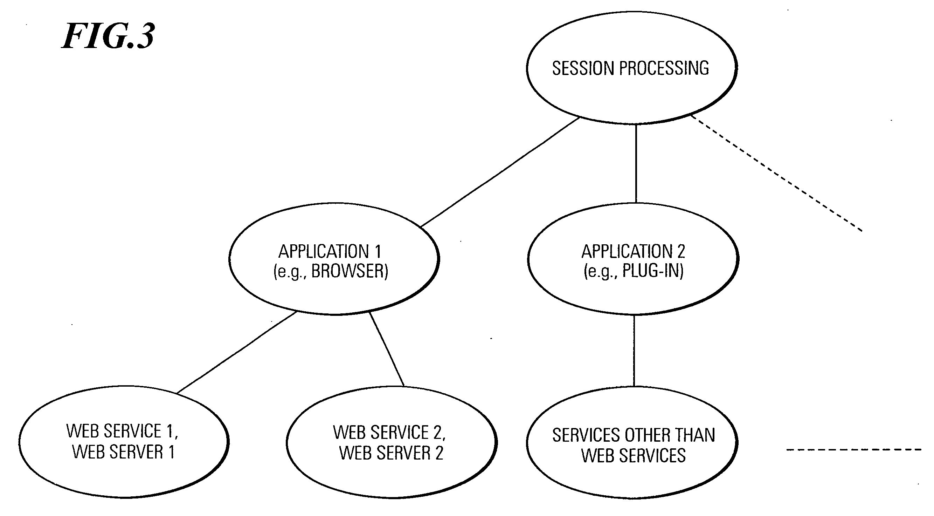

In the following, a further embodiment of the invention will be described with respect to Fig. 3.

Fig. 3 illustrates an example for a service handling context where it is assumed that the service request initiated by the end user is - among others - related to a browser application. A browser application can be any program or group of application programs allowing a convenient browsing through information or data available in distributed computing environments such as the Internet or any other network including local area networks. A browser application generally allows to view and download data and further to transmit data between different data processing devices. Further, a browser application, appropriately configured or equipped with appropriate amendments or application modules, sometimes termed plug-ins, may be enhanced with further functionality to access or process specific kinds of information available in a distributed system such as text documents, video information, audio information or any other kind of information in specialised format.

As shown in Fig. 3, such plug-ins are additional examples for what might be related to a service request. A plug-in may generally be a piece of software which may be added to any kind of larger software application, such as a browser application, the above exemplary text processing application or any other service application. A plug-in adds the defined functionality of the larger software application, for example visualisation capabilities for certain types of documents, specific processing capabilities or similar. A plug-in may be added to the larger software application generally at any desired time, provided that the larger software application is equipped to receive and integrate the plug-in. The code for the plug-in may be obtained from any source, such as over a computer network, from a data storage medium or similar. Alternatively, a plug-in may also be a piece of hardware adding functionality to an application or larger hardware structure or a combination of auxiliary soft- and hardware to enhance overall functionality.

From Fig. 3 it becomes clear that, generally, service handling with respect to an end user may be related to different services requested by the end user where different services relay on different application modules, e.g., providing browser and/or plug-in functionalities. Underlying this level abstraction, there exists a further service provision related level, i.e. being related to the question to which data processing devices - e.g., web service - applications running at the end user size will actually carry out access to for receiving service data in response to a service request.

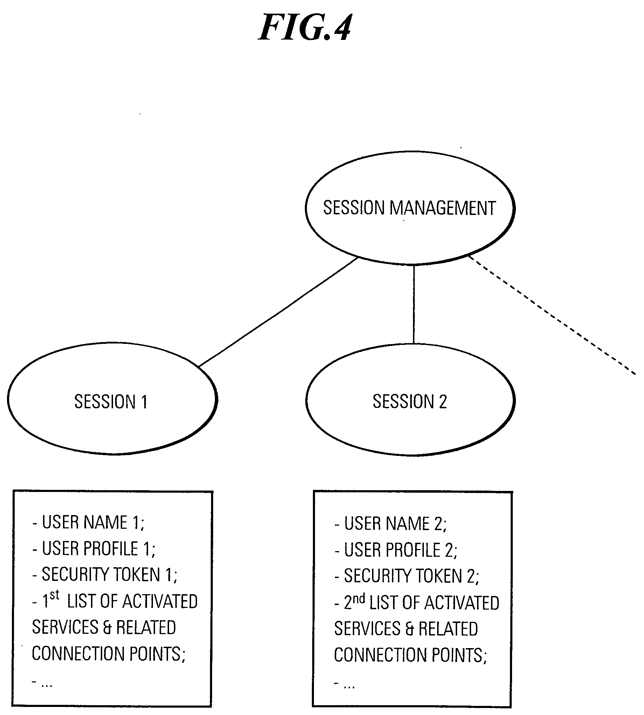

In the following, a further embodiment of the invention will be described with respect to Fig. 4.

Fig. 4 illustrates service management as counterpart to end user oriented service handling. With respect to management of different services, Fig. 4 illustrates that a management of different services is achieved through establishment of sessions that constitute a summary of different services with respect to a single end user into a service session. One typical example of such a service session may be a plurality of services being provided to the end user, e.g. web browser related services and plug-in related services, as exemplified with respect to Fig. 3.

Fig. 4 illustrates that session management relates to the administration of a plurality of session related data for different end users. Each single end user runs a session and for the session management related data is maintained as session management context, i.e. the related user name and user profile. Here, user profile may be static or dynamic data classifying the end user with respect to authorisation for access to services, preferred data exchange formats, user priority, etc. Each session management context also comprises the security token which has been returned to the end user upon successful authentication, and further a list of activated services and related connection point to the service providing data processing systems, once a security token has been provided. In addition to that, according to another example the session management contact may also comprise a list of services supported so far - e.g., through installation of related application modules or application software at the end user side.

It should be clear, that each single session management context may be maintained in a random access memory but could also be maintained on a permanent memory, allowing to still access the session management context after a complete shut down of a related data processing system. Upon resuming operations, it may be then possible to reload the session management context for subsequent analysis of information with respect to different services provided to different end users, to proceed with the provision of modifications after resumption of services.

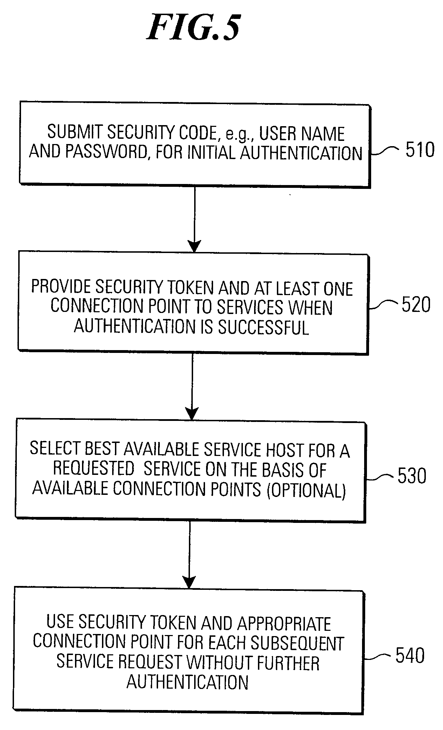

In the following, a further embodiment of the invention will be described with respect to Fig. 5.

According to the embodiment shown in Fig. 5, it is proposed to submit a security code of any kind as outlined above in an operation 510. After a successful initial authentication in operation 510 there is then provided a security token in combination with at least one connection point to services in operation 510. Optionally, there may be the possibility to select from a plurality of service hosts for provision of services in response to a submitted service request in operation 530. Such a best available service host may be selected on the basis of available connection points provided in operation 520. A benefit of such a selection mechanism is the possibility to achieve a load balancing between a plurality of service hosts providing a plurality of services to different end users. A further example is to assign a specific service to a specific service host within the service management domain. Yet another example would be to assign at least one end user to a specific service host. Still, another example would be to assign a specific end user group to either at least one service host or a group of service hosts in the service management domain. All these examples are to be considered as non-limiting for the scope of the present invention. Once a service source is available in response to a submitted service request, in operation 540 then the security token and the appropriate connection point to the related service host will be used for subsequent service processing without further authentication, as already outlined above.

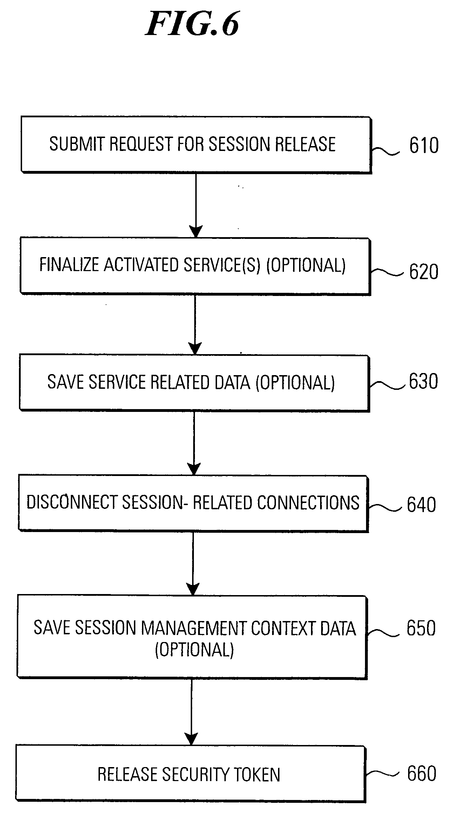

In the following, a further embodiment of the invention will be described with respect to Fig. 6.

The embodiment illustrated in Fig. 6 relates to the termination of a service session, or in other words to the release of session-related data and disconnection of session-related connections.

Initially, in operation 610 the end user will indicate that he wants to release a session through submission of a related request. Then may follow the optional operation 620 to finalize activated service(s) and the further optional operation to save service-related data to avoid waste of already used processing time. Then, in operation 640 the session-related connections between the session management domain and the service processing domain and further to a service host are disconnected and in operation 650, optionally, session management contact data may be saved, e.g., for the reason of debiting, auditing, and/or service recovery. Of course, operation 640 and 650 may as well be reverse. Finally, in operation 660 the security token may be released for subsequent use in a further service session.

The embodiment illustrated in Fig. 6 shows that according to the present invention one may choose freely between a direct and immediate shutdown of a service session upon request or on the other hand a consistent, secure and documented session shutdown. Which one is appropriate may depend on the kind of services. E.g., for banking services, it may be used to carry out the optional operation 620, 630, 640, while less security-specific services like audio/video games may allow for an immediate shutdown upon end user requests.

While above, the efficient support of a single authentication and the related shutdown of a service session has been discussed, it should be noted that also the handling of security tokens during the on-period of such service sessions allows for the implementation of valuable mechanisms for support of end users. One example would be to take specific care of security-sensitive services, like remote banking, remote access to personal-bound data, etc. Here, one example for security token management would be to block the allowability of the security token at the session management domain after a service-specific period of time. E.g., one could imagine that a security token provided for remote banking will be blocked after an hour so that after a relatively short period of time no person has access to such a banking account. A further example would be to change a security token during an ongoing session management through repeated provision to the end user without repeated authentication. In other words, the end user is repeatedly provided with security tokens at certain points in time without repeated authentication to increase the security level for the ongoing service session. Yet another example for the handling of security tokens could be that the security tokens are provided in a way dependent on the area of application, e.g., in a way that each security token is only provided for a specific country, region in a country, etc. Yet another example for security management would be that for charged services a security token is only provided when the requesting end user has previously deposited a sufficient amount of money with the service provider in the service management domain. Here, one could imagine that a continuous monitoring of the deposited service compensation amount is achieved in the service management domain and that a security token provided to the end user is blocked once the amount of money is no longer enough to pay for the requested services. All the examples given above for the security token management are non-limiting for the scope of the present invention and only serve to illustrate the applicability thereof.

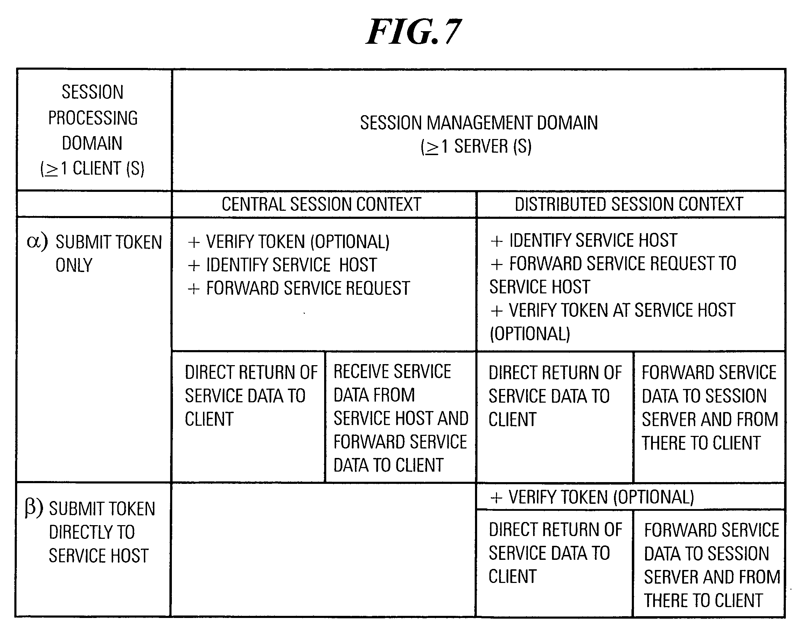

Fig. 7 illustrates examples for the interrelation between the session handling domain/context illustrated with respect to Fig. 3 and the session management domain/context illustrated with respect to Fig. 4. Here, an example would be the application of the client/server architecture where session handling is achieved through at least one client data processing system and session management is achieved through at least one server data processing system. The client data processing systems then set up a session handling domain, while the server data processing systems set up the session management domain. Further, in the session management domain there may be the server or plurality of servers handling session management as exemplified with respect to Fig. 4 alone, while further servers provide services and related response data on requests of the end user. The latter service will also be referred to as service host in the following, i.e. as a data processing device that acts as a source of information or signals.

As illustrated in Fig. 7 there exists a plurality of options how to proceed with service handling, service management and service hosting:

According to a first example the session context for a plurality of end users may be administered in a centralised manner, i.e. at a single session management server. The session management server then handles the authentication of the end user for submission of a related token back to the service processing domain. Upon retransmission of the assigned security token from the session processing domain, i.e. the client data processing system available to the end user, the session management server will then verify the security token. It should be noted that this operation may be optional and may be omitted as well to reduce the processing effort in the session management domain.

Further, the session management server will then identify a service host providing the service requested by the end user which may be the session management server itself or any other server data processing system in the session management domain. Having identified such a service host the service request will be forwarded thereto.

After receipt of the service request and the processing thereof the service host has the option to either directly return the service response data to the session handling domain or to forward the service response data back to the session management server which will then forward the service response data to the session handling domain. While the former has the advantage of direct and therefore accelerated data exchange, the latter is of advantage in case only a single access point to the session management domain is desirable.

Another option illustrated in Fig. 7 relates to a distributed maintenance of session context. Here, session management data may be distributed over the session management domain so that each single data processing system - e.g., each server in the session management domain - has direct access to session context data.

Here, the session management server only has to identify the appropriate service host and forwards the service request(s) thereto. Then, verification of the submitted security token may be achieved at the service host, if required. In other words, the verification of the submitted security token at the service host is optional.

Once the submitted service request has been processed at the service host again two options exist for retransmission of service response data within the distributed session context. A first option is the direct return of service response data to the session handling domain, and a second option is the forwarding of service response data to the service management server for subsequent transmission to the session processing domain.

Accordingly, a service host for each service request submitted by the session processing unit may be identified, e.g., by the session management unit, and the service request may be forwarded to the identified service host. The service request may include or constitute a request for data, parameters, etc., and may include a command or similar.

Further, the session management unit may be adapted to receive service data in response to the processing of the service request at the service host for subsequent forwarding to the session processing unit.

Moreover, the session management unit may be adapted to effect a direct forwarding of service data from the service host to the session processing unit in response to the processing of the service. This could be accomplished by sending corresponding instructions to the service host and/or session processing unit or by any other means.

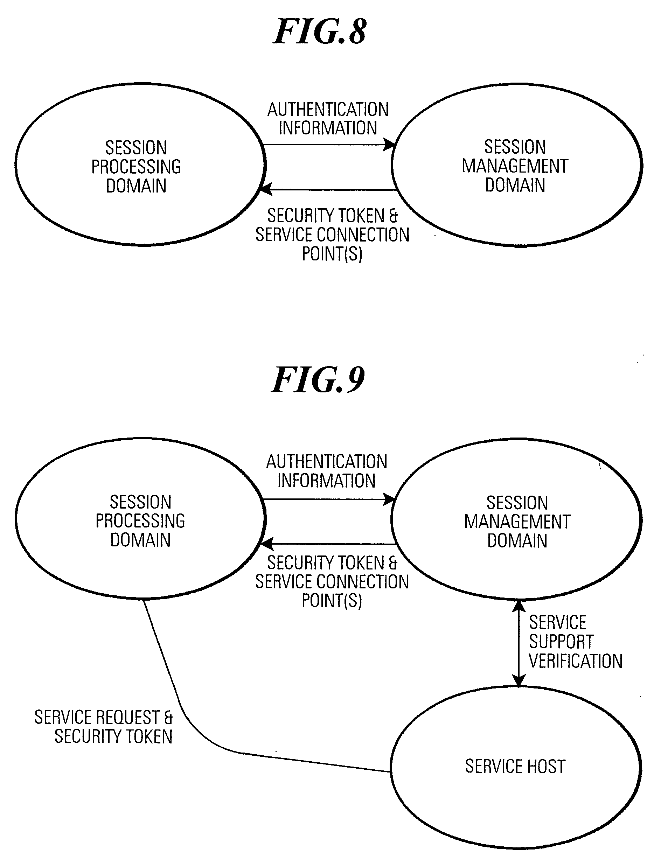

Fig. 8 illustrates another option for the interaction between the session processing domain and the session management domain.

Upon verification of the submitted authentication information the requesting end user is not only provided with a security token, but also with connection points for direct access to related service hosts. Here, a connection point may be a number assigned to an application providing a service running on a service host, e.g., a server in the session management domain.

An end user requesting a service may then not only submit a service request but also have direct access to the related service hosts through the related connection points. Then, the service host may verify the security token - which operation is optional - and then either achieve it direct return of service response data to the session handling domain or a forwarding of the service response data to a different session management server for transmission to the session processing domain.

Fig. 9 illustrates another option where the security token and related connection points are available in the session processing domain.

Here, the processing of a service request is split between a session management server and a service host. The security token and the related service request(s) and connection point(s) are forwarded to the service host, which then exchanges the security token with the session management server for verification. After confirmation of the security token the service host proceeds with the processing of the service request and the provision of the service response data.

Processing different scenarios for the interaction between a session domain and a session management domain have been explained with respect to the handling of the verification of the security token in the session management domain. Further examples of the invention relate to the maintenance of a session context in the session management domain and the way how service response data is generated and forwarded back to the session handling domain. Also, a requested service may require the provision of new functionality in the session handling domain, e.g., the installation of a new software/application module at the data processing system, e.g., a client, used by the end user for interaction for the overall computing environment.

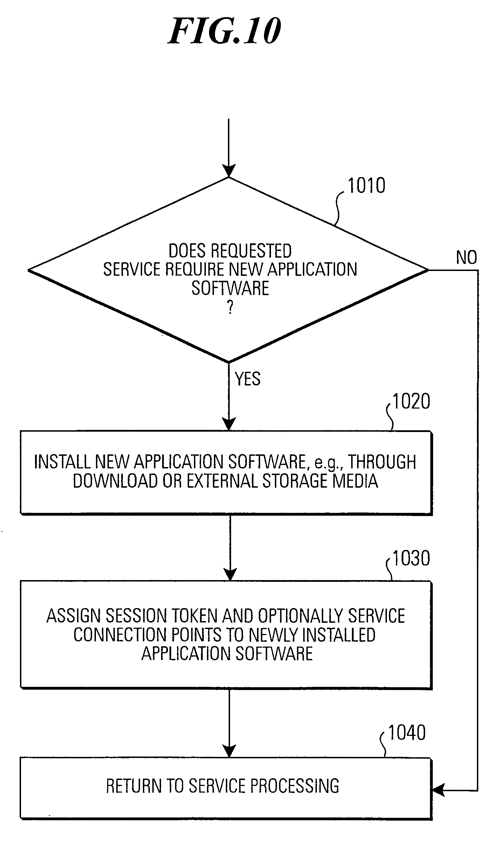

In the following, a related embodiment of the invention will be described with respect to Fig. 10.

Fig. 10 illustrates that its first operation 1010 to determine whether a new application module is required. Here, this interrogation may be achieved at the service handling domain or in other words the domain were the end user has direct access to or otherwise also in the service management domain.

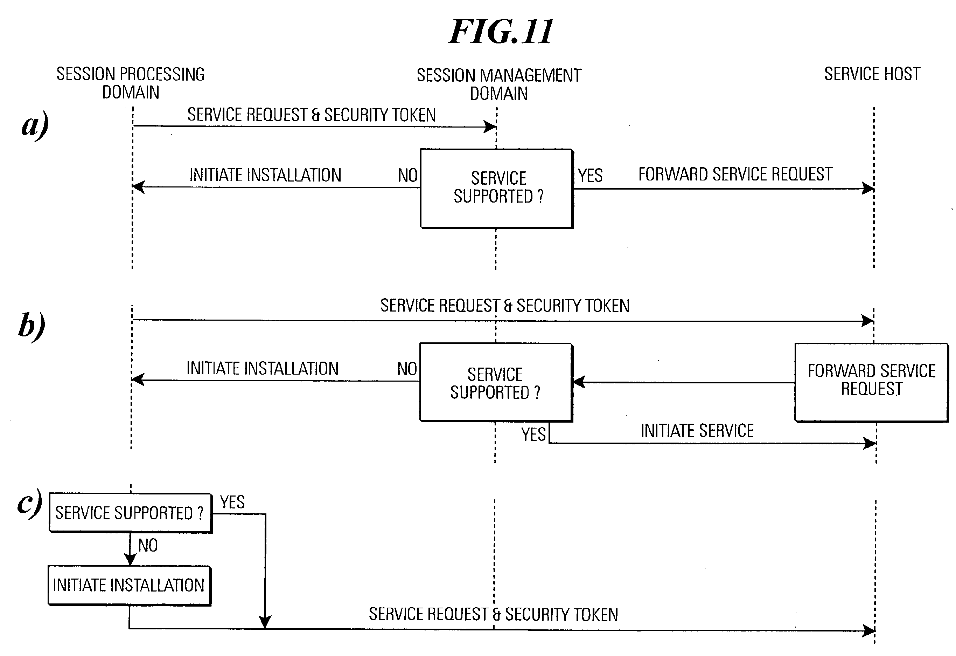

One example is shown in Fig. 11(a) to incorporate information on already supported services at the end user side, e.g., into the session management context and then to compare a submitted service request with this list of supported services. Alternatively and as shown in Fig. 11(b), also the service host may - upon processing of service request - carry out an interrogation at the session management domain. Yet another example for realizing the interrogation operation 1010 shown in Fig. 10 is illustrated in Fig. 11(c). Here, upon initialization of a service request, initially it is checked in the session processing domain whether the requested service is already supported. If the result of this operation is 'no', initially the related application module or software is installed in the session processing domain - as will be explained in more detail in the following - and only then the service request and security token may be submitted to the session management domain or alternatively to the service host.

Referring again to Fig. 10, when the interrogation operation 1010 leads to the result that a new application module is necessary, this new application module may then be installed at the end user side in operation 1020. Again, it should be clear that the application module may be either provided in hardware or in software. In the latter case, the application software may be provided through downloading from the session management domain or from an external storage media for which examples have already been given above.

A further operation 1030 shown in Fig. 10 is related to the assignment of the session token already available before operation 1010 to the newly installed application module. Optionally, also service connection points may be assigned to the application module. The outcome of operation 1030 is that upon activation of the newly installed application module the application module may not only generate a service request but also extend the service request by the assigned session token and optionally service connection points for the submission to the service management domain. Therefore, all operations necessary for the activation of a requested service at the end user side may be achieved without interrupting the flow of service processing at the end user side, particularly without requesting a repeated authentication also for the newly installed application module. Therefore, after assignment of the session token to the newly application unit a further operation 1040 is the return to service processing.

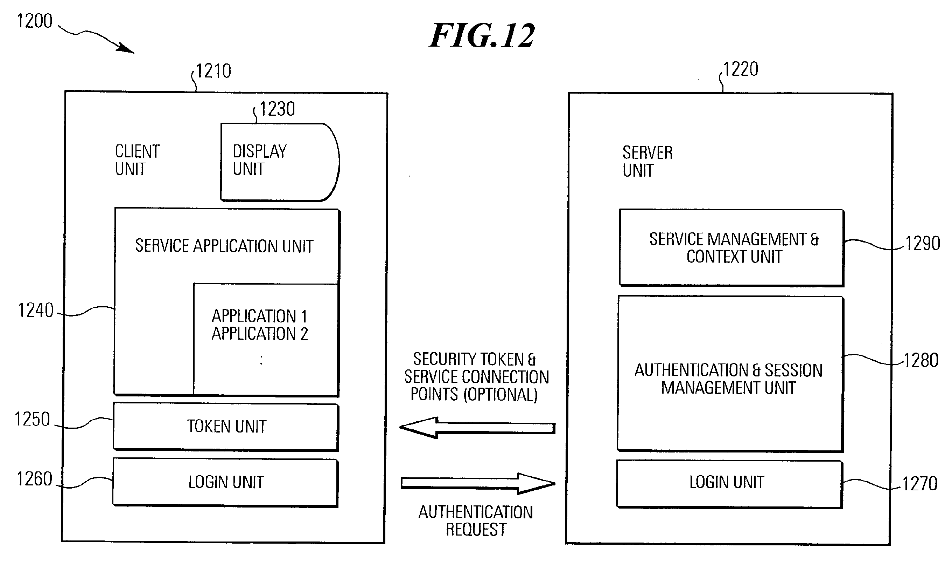

In the following, a further embodiment of the invention will be described with respect to Fig. 12.

Fig. 12 shows a client server system using a single authentication process for a plurality of services already explained above. The client service system 1200 divides into at least one client unit 1210 and at least one server unit 1220. Without limiting the scope of the invention, one may assume as one example thereof that the client unit realizes the service processing/handling domain and that the server unit 1220 forms part of the session management domain. Further, as shown in Fig. 12, the client unit 1210 has a display unit 1230, a service application unit 1240, a token unit 1250, and a log-in unit 1260. Operatively, the display unit may display I/O-related and service-related data to the user of the client unit 1210. Further, the service application unit supports all processing with respect to provision of services to the user of the client unit 1210. Further, the token unit 1250 supports all functionality described above with respect to the security token, and the log-in unit 1260 supports all functionality being related to the authentication of an end user, as outlined above.

As counterpart to the log-in unit 1260 of the client unit, Fig. 12 shows that also the server unit 1220 has a log-in unit 1270 for reception of the authentication request from the client unit 1210 and forwarding to the authentication and session management unit 1280. In addition, the server unit 1220 comprises a service management and context unit. Operatively, the log-in unit 1270 in the server unit 1220 is the low level unit for reception of authentication information at the server side. On a higher level of abstraction the authentication unit will then verify the submitted authentication request for submission of a security token back to the client unit 1210. Optionally, the authentication unit and session management unit 1280 may also provide service connection points to the client unit 1210. Further, the service management unit 1290 may also maintain the context of a session as explained with respect to Fig. 4.

While above different units both of the client unit 1210 and the server unit 1220 have been explained, it should be clear that these units may as well be combined with each other or split up into further units. Also, each single unit may either be realized in hardware or in software or in a combination of hard- and software. Further, the client server system explained with respect to Fig. 12 may be adapted to any distributed computing environment known in the art, i.e., local area networks, wireless LAN networks, or any other kind of system relying on the client server paradigm.

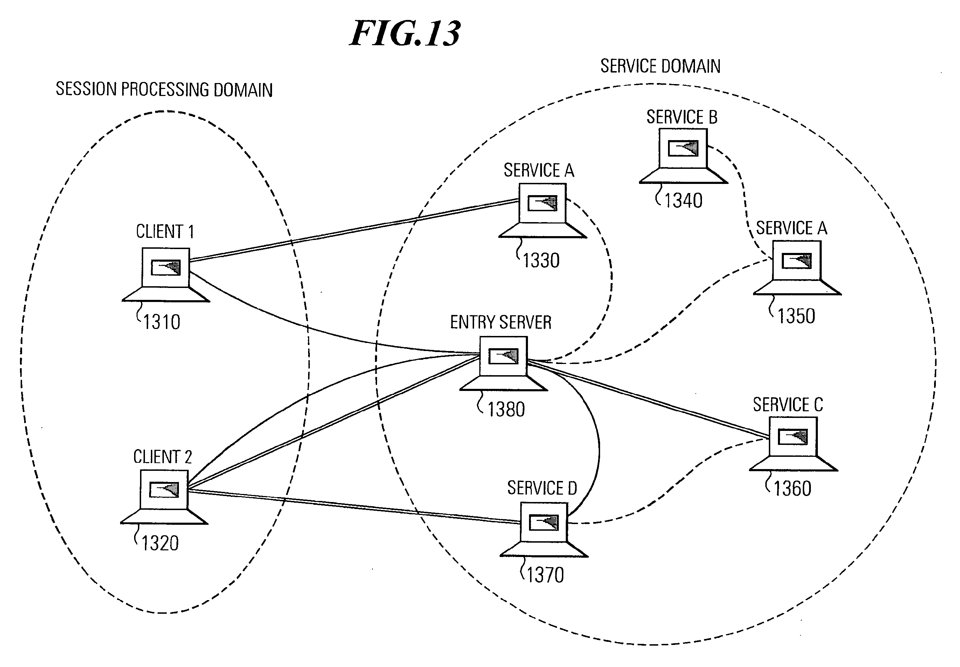

In the following, different examples for the application of the client server architecture shown in Fig. 12 will be described with respect to Fig. 13.

Fig. 13 shows an example for the interaction of the service handling domain and the service management domain, with a more detailed reference to a distributed client server system.

As shown in Fig. 13 the session handling domain divides into a plurality of client processing systems 1310, 1320 and a plurality of server processing systems 1330 to 1380 in the session management domain. Without limiting the present invention it may be assumed that one of the server processing systems, i.e. server 1380, is an entry server to the session management domain. The further servers in the session management domain 1330-1370 are servers acting as service host(s).

As also shown in Fig. 13, the change of data between the session handling domain and the session management domain and also within the session management domain may be classified into different categories. A first category is the exchange of authentication and session management related data (solid line), further, the exchange of session management related data within the session management domain (dashed line), and the exchange of service payload data both within the session management domain and between the session handling domain and the session management domain (double solid line).

As illustrated in Fig. 13 either one of the clients 1310, 1320 initially sets up a communication dialogue with the entry server 1380 for exchange of authentication data and for receipt of a security token, and optionally information on connection points, i.e., numbers assigned to application running on the service hosts 1330 to 1370. Subsequent hereto, an example for the present invention would be that client unit 1310 requests a service from the entry server 1380 which may then - after verification of a submitted security token, forward the service request to the service host 1330. Having processed the service request, the service host 1330 may then directly feed back the service response data to the client unit 1310.

Another example shown in Fig. 13 would be that the entry service 1380 receives a service request from the client unit 1320 and forwards the service request to the service host 1360. After generation of the service response data the service host 1360 may return the service response data to the entry server 1380 for subsequent retransmission to the client unit 1320.

Another example being related to the distributed context maintenance of session data already explained above would be that the entry server 1380 receives a service request and related token from the client 1320 and forwards this data without verification to the service host 1370. Then the service host 1370 may verify the submitted security token and directly respond with the related response data to the client unit 1320.

This distributed client/server system supports flexibility in service processing. E.g., a first example would be that different clients - i.e. different end users - are handled with different priorities. In this case, the entry server 1380 would set up, e.g., a priority queue putting in the clients with higher priority before clients with lower priority.

Another example would be the implementation of a load balancing mechanism for the handling of service requests within the session management domain. Here, before forwarding a service request to the specific service host, the entry server 1380 may initially determine the load on each single service host 1330 to 1370, the availability of the requested service at each service host 1330/1370, and then select the service host providing the requested service and having the lowest current processing load imposed thereon.

Yet another example would be to specify a security token together with a preferred sub-domain in the session management domain for the processing of services requested using the security token.

It should also be noted that the distributed client/service system is well adapted to support browser applications relying only on a single authentication operations although further plug-in functionality may be required. In this case, if the browser is equipped with the appropriate remote visualization protocol or run-time environment component service, data necessary to authenticate a specific end user may be retrieved from an arbitrary storage location, appropriately rendered by a authentication application located at the entry server and displayed at the clients in a browser frame on a display unit.

A remote visualization protocol or run time environment component service is to ensure convenient access from a first computer system to resources available at a second computer system - in the present example, any application or group of applications or modules which enable a user at a client unit to communicate with a server unit in the service management domain for new information provided by a server in the server management domain, e.g. the entry server. For example, a remote visualization protocol or run-time environment component service may enable an end user to connect to the entry server, to control an application such as the above exemplary authentication application at the entry server and to view processing results such as a log-in display window. A remote visualization protocol or run time environment component service may cooperate with a browser application to provide the above functionality. Here, the benefit is the achievement of a single look and feel for the end user both for authentication and for running applications.

An example of a run time environment component service is disclosed in the European patent application EP 01100136.9, entitled "Run Time Environment Component Services" and filed on January 15, 2001, which is incorporated herein by reference.

Accordingly, an end user would be able to authenticate, through use of a browser, to the session management domain to achieve a very convenient look and feel for the end user.

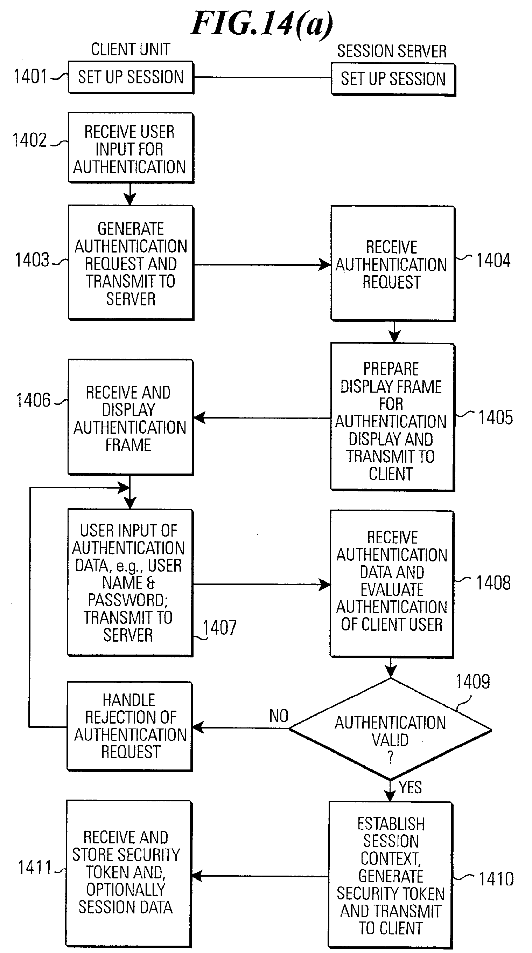

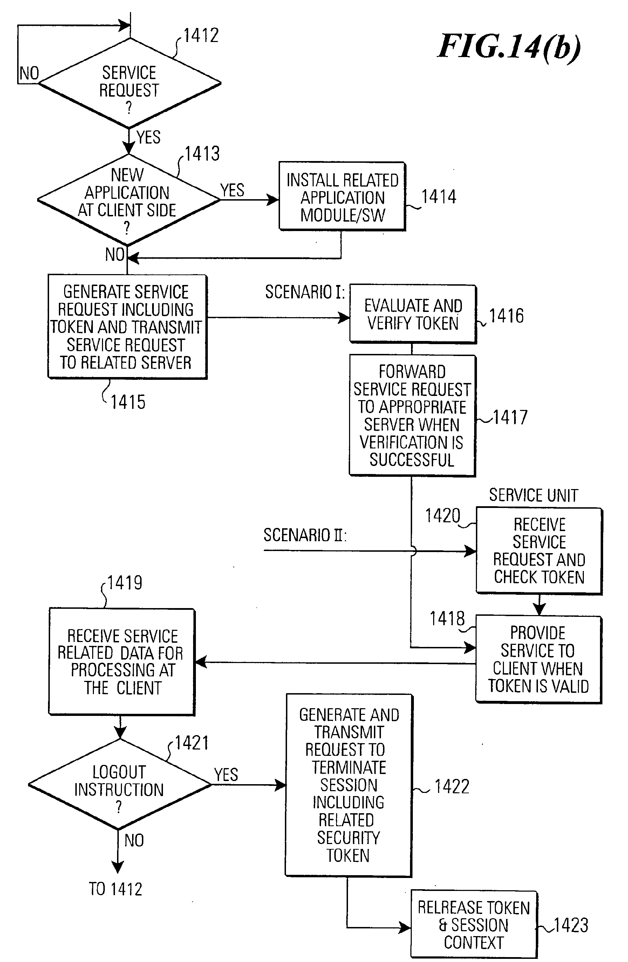

In the following, a further embodiment of the invention will be described with respect to Fig. 14(a) and 14(b).

Figs. 8(a) and 8(b) illustrate further examples of the inventive authentication mechanism running in a distributed client service system on a more detailed level.

As outlined above, data processing system involved in the authentication mechanism are the client unit and the entryserver. Initially, an operation 1401 establishes a session set up between a client unit and the entry server.

Then the client server receives a user input for authentication in operation 1402 and generates an authentication request for transmission to the entry server in operation 1403. In the related operation 1404 the entry server receives the authentication request and prepares a display frame for authentication display and transmission to the client unit in operation 1405.

Then, in operation 1406 the client unit receives and displays the authentication frame for subsequent user input of authentication data, e.g., user name and password. Another example would be that the display frame is generated locally at the client unit for display in operation 1406 for reduction of amount of data to be exchanged between the client unit and the entry server.

Then, in operation 1407 the user inputs the actual authentication data like user name and password for transmission to the server. In the related operation 1408 the entry server will receive the authentication data and verify this data for the client user. Then, in operation 1409 the entry server evaluates whether the authentication has been successful. If the result is 'no', the entry server forwards related information to the client unit which will then handle the rejection of the authentication request in operation 1410. Here, one option for handling the rejection is to prompt the user again for input of the authentication data so that the user has the option to correct the data. Another option would be the closing of the session between the client unit and the entry server.

If the result of the operation 1409 is Yes, the entry server will then establish a session context and generate a security token for transmission to the client unit in operation 1410. The operation of generating the security token may employ any technique to obtain a piece of information allowing an unambiguous identification for authentication purposes, and may include techniques known in the art. In response to operation 1410 the client unit will receive the security token for subsequent maintenance in operation 1411. Here, a first option for maintenance of the received security token may be the storage in the working memory of the client unit, further the storage in a data file or the storage in a storage media external to the client unit. Optionally, together with the security token also session related data like service connection points may be maintained for the client unit for subsequent speed of service host access.

Then, as shown in Fig. 14(b), in operation 1412 there is a continuous evaluation whether an end user has submitted a service request to the client unit. If the result is No, the interrogation operation 1412 will be repeated. Otherwise, if the result is Yes, the process flow will proceed to operation 1413 to evaluate whether the requested service requires the installation of a new application module at the client unit.

If the result of the interrogation operation 1413 is 'yes', then the necessary application module will be installed at the client unit during operation 1414, as exemplified above, with respect to Fig. 10. Subsequent hereto, the service processing proceeds to operation 1415 to generate a service request including the security token for transmission to the entry server.

According to a first scenario the generated service request will be forwarded to the entry server which then evaluates and verifies the submitted security token in operation 1416, and after identification of an appropriate service host forwards the service request to this service host in case the verification is successful in operation 1417. In operation 1418 the service host will then generate the service response data and forward the service response data to the client unit. In operation 1419 the client unit receives the service response data for local processing at the client unit.

A second scenario illustrated in Fig. 14(b) is the direct forwarding of a service request from the client unit the service host. According to this scenario the service host receives the service request with the security token for evaluation of the allowability of the submitted request on the basis of the submitted security token in operation 1420. If the result of the evaluation is positive, the service host then proceeds to operation 1418 for further processing of the service request, as previously explained. Otherwise, the service host may reject the submitted service request.

Further, subsequent to the handling of the service response data in operation 1419 at the client unit there follows an operation 1421 for checking a log-out instruction at the client unit. Here, log-out may be related to a session on the one hand or to a shut down of the client unit itself. If the result of the operation 1421 is 'no', the process flow may branch back to operation 1412 to check on further service requests at the client unit. If the result of the operation 1421 is 'yes', the client unit will inform the entry serve about the log-out instructions. In operation 1422 the entry server will then generate and transmit a request to terminate the session including the release of the security token to the client unit. Further, for the example distributed session context is explained above with respect to Fig. 7 the entry server will also inform all servers in the session management domain maintaining the related session context about the service session shut down. Then, in operation 1423 the entry server will release the security token and the session context. In other words, once the security token is released it may be used for a further service session set up. The temporary characteristic of the security token increases security within the service management domain since only the time period where the session context is maintained at the entry server or any other data processing device within the session management domain may be used with this security token.

While above different examples and embodiments of the invention have been described with reference to the drawing it is to be understood that these are non-limiting to the scope and gist of the present invention and that a person skilled in the art is readily prepared to realize such modifications and variations. A first example for this is that while above a session has been described with respect to a plurality of services it may also be possible to set up a single session for each requested service. Further, it may be possible to use a single security token for a plurality of end users, thus achieving a shared token mechanism which is of particular advantage for services shared by a plurality of end users, e.g. video games, shared data base maintenance, etc.. Another example would be the provision of the same security token to the same end users logging in at a plurality of client units in the session handling domain to avoid maintenance of a plurality of service management contexts in the service management domain.

According to another example, a session management unit may have the following constitution:
1) Session management unit for managing a plurality of services including
   - a code section having instructions to receive authentication information from a session processing unit adapted to handle a service session divided into a plurality of services, upon initialisation of a first service, and
   - a code section having instructions to return a security token for initialisation of each subsequent service of the service session without repeated submission of authentication information.
2) Session management unit according to 1), including a code section having instructions to return the security token to the session processing unit only after successful verification of the authentication information.
3) Session management unit according to 1), including a code section having instructions to identify a service host for each service request submitted by the session processing unit and to forward the service request to the identified service host.
4) Session management unit according to 3), including a code section having instructions to receive service data in response to the processing of the service request at the service host for subsequent forwarding to the session processing unit.
5) Session management unit according to 3), including a code section having instructions to effect a direct forwarding of service data from the service host to the session processing unit in response to the processing of the service.
6) Session management unit according to 1), including a code section having instructions to maintain session context information comprising at least the security token assigned for the service session, the authentication information, a list of services activated during the service session, and a list of connection points to related service hosts.
7) Session management unit according to 6), including a code section having instructions to maintain the session context information in a centralized manner at the session management unit.
8) Session management unit according to 6), including a code section having instructions to maintain the session context information in a distributed manner at the service hosts.
9) Session management unit according to 1), including a code section having instructions to return at least one service connection to a service host in addition to the security token for direct contact of the session processing unit to the at least one service host.
10) Session management unit according to 1), including a code section having instructions to effect set-up an authentication window for input of authentication data at a display.
11) Session management unit according to 19), including a code section having instructions to effect set-up of an authentication window as a browser window.
12) Session management unit according to 1), located at a server side, and including a code section having instructions to remotely communicate with the session processing unit, the session processing unit being located at a client side.
   According to another example, a session processing unit may have the following constitution:
13) Session processing unit for handling a service session divided into a plurality of services, including
   - a code section having instructions to transmit authentication information to a session management unit upon initialisation of a first service; and
   - a code section having instructions to receive a security token for initialisation of each subsequent service of the service session without repeated submission of authentication information.
14) Session processing unit according to 13), including a code section having instructions to receive the security token at the session processing unit only after successful verification of the authentication information.
15) Session processing unit according to 13), including a code section having instructions to effect identification of a service host for each service request submitted by the session processing unit and for effecting forwarding of the service request to the identified service host.
16) Session processing unit according to 15), including a code section having instructions to receive service data in response to the processing of the service request at the service host from the session management unit.
17) Session processing unit according to 15), including a code section having instructions to directly receive service data from the service host in response to the processing of the service.
18) Session processing unit according to 13), including a code section having instructions to effect maintenance of session context information at the service management unit, comprising at least the security token assigned for the service session, the authentication information, a list of services activated during the service session, and a list of connection points to related service hosts.
19) Session processing unit according to 18), including a code section having instructions to effect maintenance of the session context information in a centralized manner at the session management unit.
20) Session processing unit according to 18), including a code section having instructions to effect maintenance of the session context information in a distributed manner at the service hosts.
21) Session processing unit according to 13), including a code section having instructions to return at least one service connection to a service host in addition to the security token for direct contact of the session processing unit to the at least one service host.
22) Session processing unit according to 13), including a code section having instructions to evaluate, whether a new service request requires a new application module, further to install the new application module at the session processing unit in the affirmative case, and to assign the session token and optionally service connection points to the newly installed application module.
23) Session processing unit according to 13), including a code section having instructions to set-up an authentication window for input of authentication data at a display.
24) Session processing unit according to 22), including a code section having instructions to arrange the authentication window as browser window.
25) Session processing unit according to 13), located at a client side, and including a code section having instructions to remotely communicate with the session management unit, the session processing unit being located at a server side.

## Claims

1. Session management unit for managing a plurality of services, comprising:
- a reception unit for receiving authentication information from a session processing unit adapted to handle a service session divided into a plurality of services, upon initialisation of a first service, and
- an authentication unit for returning a security token to initialise each subsequent service of the service session without repeated submission of authentication information.

2. Session management unit according to claim 1, wherein the authentication unit returns the security token to the session processing unit only after successful verification of the authentication information.

3. Session management unit according to claim 1 or 2, further comprising a service management unit for identifying a service host for each service request submitted by the session processing unit and for forwarding the service request to the identified service host.

4. Session management unit according to claim 3, wherein the service management unit receives service data in response to the processing of the service request at the service host for subsequent forwarding to the session processing unit.

5. Session management unit according to claim 3, wherein the service management unit effects a direct forwarding of service data from the service host to the session processing unit in response to the processing of the service.

6. Session management unit according to one of the claims 1 to 5, comprising a context unit for maintaining session context information comprising at least the security token assigned for the service session, the authentication information, a list of services activated and/or supported during the service session, and a list of connection points to related service hosts.

7. Session management unit according to claim 6, wherein the context unit effects maintenance of the session context information in a centralized manner at the session management unit.

8. Session management unit according to claim 6, wherein the context unit effects maintenance of the session context information in a distributed manner at the service hosts.

9. Session management unit according to claim 1, wherein the authentication unit returns at least one service connection to a service host in addition to the security token for direct contact of the session processing unit to the at least one service host.

10. Session management unit according to one of the claims 1 to 9, wherein the authentication unit sets up of an authentication window for input of authentication data at a display.

11. Session management unit according to one of the claims 1 to 10, wherein the service management unit provides at least one of the services in a service session as Web service.

12. Session management unit according to claim 10 or 11, wherein the authentication unit effects set-up of the authentication window as browser window.

13. Session management unit according to claim 11 or 12, wherein the at least one Web service is a browser for browsing through data in a network of data processing devices.

14. Session management unit according to one of the claims 1 to 13, which is located at a server side, and adapted for remote communication with the session processing unit, the session processing unit being located at a client side.

15. Session processing unit for handling a service session divided into a plurality of services, comprising:
- a login unit for transmission of authentication information to a session management unit upon initialisation of a first service in a service session; and
- a token unit for receiving a security token to initialise each subsequent service of the service session without repeated submission of authentication information.

16. Session processing unit according to claim 15, wherein the token unit receives the security token at the session processing unit only after successful verification of the authentication information.

17. Session processing unit according to claim 15 or 16, wherein a service application unit effects identification of a service host for each service request submitted at the session processing unit and forwards the service request to the identified service host.

18. Session processing unit according to claim 17, wherein the service application unit receives service data in response to the processing of the service request at the service host from the session management unit.

19. Session processing unit according to claim 17, wherein the service application unit directly receives service data from the service host in response to the processing of the service.

20. Session processing unit according to one of the claims 15 to 19, wherein the service application unit effects maintenance of session context information at the service management unit, comprising at least the security token assigned for the service session, the authentication information, a list of services activated and/or supported during the service session, and a list of connection points to related service hosts.

21. Session processing unit according to claim 20, wherein the service application unit effects maintenance of the session context information in a centralized manner at the session management unit.

22. Session processing unit according to claim 20, wherein the service application unit effects maintenance of the session context information in a distributed manner at the service hosts.

23. Session processing unit according to claim 15, wherein the service management unit returns at least one service connection to a service host in addition to the security token for direct contact of the session processing unit to the at least one service host.

24. Session processing unit according to one of the claims 15 to 23, wherein the service application unit evaluates, whether a new service request requires a new application module, further installs the new application module at the session processing unit in the affirmative case, and assigns the session token and optionally service connection points to the newly installed application module.

25. Session processing unit according to one of the claims 15 to 24, wherein the service application unit sets up an authentication window for input of authentication data at a display.

26. Session processing unit according to one of the claims 15 to 25, wherein at least one of the services of a service session is a Web service.

27. Session processing unit according to claim 25 or 26, wherein the authentication window is arranged as a browser window.

28. Session processing unit according to claim 26 or 27, wherein the at least one Web service is a browser for browsing through data in a network of data processing devices.

29. Session processing unit according to one of the claims 15 to 28, which is located at a client side, and adapted for remote communication with the session management unit, the session processing unit being located at a server side.

30. Method for managing a plurality of services at a session management unit, including:
- receiving authentication information from a session processing unit adapted to handle a service session divided into a plurality of services, upon initialisation of a first service, and
- returning a security token for initialisation of each subsequent service of the service session without repeated submission of authentication information.

31. Method according to claim 30, including returning the security token to the session processing unit only after successful verification of the authentication information.

32. Method according to claim 30 or 31, including identifying a service host for each service request submitted by the session processing unit and forwarding the service request to the identified service host.

33. Method according to claim 32, including receiving service data in response to the processing of the service request at the service host for subsequent forwarding to the session processing unit.

34. Method according to claim 32, including a direct forwarding of service data from the service host to the session processing unit in response to the processing of the service.

35. Method according to one of the claims 30 to 34, including maintaining session context information comprising at least the security token assigned for the service session, the authentication information, a list of services activated and/or supported during the service session, and a list of connection points to related service hosts.

36. Method according to claim 35, including maintaining the session context information in a centralized manner at the session management unit.

37. Method according to claim 35, including maintaining the session context information in a distributed manner at the service hosts.

38. Method according to claim 30, including returning at least one service connection to a service host in addition to the security token for direct contact of the session processing unit to the at least one service host.

39. Method according to one of the claims 30 to 38, including effecting set-up an authentication window for input of authentication data at a display.

40. Method according to one of the claims 30 to 39, wherein at least one of the services of a service session is a Web service.

41. Method according to claim 39, including effecting set-up the authentication window as a browser window.

42. Method according to claim 40 or 41, wherein the at least one Web service is a browser for browsing through data in a network of data processing devices.

43. Method according to one of the claims 30 to 42, wherein the session processing unit is located at a client side and the session management unit is located at a server side and remotely communicates with the session processing unit.

44. Method according to claim 30, including the release of a security token at the end of a service session.

45. Method according to claim 30, including the modification of a security token during the time period a service session is activated.

46. Method according to claim 44, including the finalization of activated services and the saving of related service data before release of a security token.

47. Method according to claim 46, further including the saving of session context information before release of a security token.

48. Method for handling, at a session processing unit, a service session divided into a plurality of services, including
- transmitting authentication information to a session management unit upon initialisation of a first service; and
- receiving a security token for initialisation of each subsequent service of the service session without repeated submission of authentication information.

49. Method according to claim 48, including receiving the security token at the session processing unit only after successful verification of the authentication information.

50. Method according to claim 48 or 49, including effecting identification of a service host for each service request submitted by the session processing unit and effecting forwarding of the service request to the identified service host.

51. Method according to claim 48, including receiving service data in response to the processing of the service request at the service host from the session management unit.

52. Method according to claim 48, including direct receiving of service data from the service host in response to the processing of the service.

53. Method according to one of the claims 48 to 52, including effecting maintenance of session context information at the service management unit, comprising at least the security token assigned for the service session, the authentication information, a list of services activated and/or supported during the service session, and a list of connection points to related service hosts.

54. Method according to claim 53, including effecting maintenance of the session context information in a centralized manner at the session management unit.

55. Method according to claim 53, including effecting maintenance of the session context information in a distributed manner at the service hosts.

56. Method according to claim 48, including returning at least one service connection to a service host in addition to the security token for direct contact of the session processing unit to the at least one service host.

57. Method according to one of the claims 48 to 56, including evaluating whether a new service request requires a new application module, further installing the new application module at the session processing unit in the affirmative case, and assigning the session token and optionally service connection points to the newly installed application module.

58. Method according to one of the claims 48 to 57, including setting up an authentication window for input of authentication data at a display.

59. Method according to one of the claims 48 to 58, wherein at least one of the services of a service session is a Web service.

60. Method according to claim 58 or 59, including arranging the authentication window as a browser window.

61. Method according to claim 59, wherein the at least one Web service is a browser for browsing through data in a network of data processing devices.

62. Method according to one of the claims 48 to 61, wherein the session processing unit is located at a client side and the session management unit is located at a server side and remotely communicates with the session processing unit.

63. A program having instructions for carrying out the method of at least one of the claims 30 to 62.

64. A computer readable medium, in which a program is embodied, where the program is to make a computer execute the method of at least one of the claims 30 to 62.

65. A computer program product comprising the computer readable medium according to claim 66.
